# EUROPEAN PATENT APPLICATION

(11) **EP 4 651 596 A1**
(43) Date of publication of application: **19.11.2025**
(21) Application number: 23915965.0
(22) Date of filing: 11.01.2023
(51) Int. Cl.: H04W 72/115, H04W 72/231, H04W 72/232

(54) **TERMINAL AND COMMUNICATION METHOD**

(71) Applicant: NTT DOCOMO, INC., Tokyo 100-6150 (JP)
(72) Inventor: TAKAHASHI, Yuki, Tokyo 100-6150 (JP); NAGATA, Satoshi, Tokyo 100-6150 (JP); PI, Qiping, Beijing, 100190 (CN); WANG, Jing, Beijing, 100190 (CN); CHEN, Lan, Beijing, 100190 (CN)
(74) Representative: Hoffmann Eitle
(86) International application number: PCT/JP2023/000485
(87) International publication number: WO 2024/150342

(57) **Abstract**

Provided is a terminal comprising a reception unit which receives a parameter of higher layer signaling and a control unit which determines activation or deactivation of transmission of an uplink signal on the basis of a downlink control signal and the parameter of the higher layer signaling. In this invention, the control unit determines each of a plurality of uplink signal occasions in one period on the basis of individual pieces of time resource allocation information.

## Description

### Technical Field

The present disclosure relates to a terminal and a communication method.

### Background Art

Long Term Evolution (LTE) has been specified for achieving a higher data rate, lower latency, and the like in a Universal Mobile Telecommunication System (UMTS) network. For a wider bandwidth and higher speed than LTE, a successor system to LTE has also been studied. Examples of the successor systems to LTE include systems called LTE-Advanced (LTE-A), Future Radio Access (FRA), 5th generation mobile communication system (5G), 5G plus (5G+), Radio Access Technology (New-RAT), New Radio (NR), and the like.

In 5G, various radio technologies and network architectures have been studied to satisfy the requirement of reducing the latency in the radio section to 1 ms or less while achieving the throughput equal to or greater than 10 Gbps (e.g., Non-Patent Literature (hereinafter, referred to as "NPL") 1).

In NR, the configuration of a Configured Grant Physical Uplink Shared Channel (CG PUSCH) is specified in Release 16 (e.g., NPL 2). The CG PUSCH includes Type 1 CG PUSCH and Type 2 CG PUSCH.

In Release 17, studies have been made for Extended Reality (XR) such as Virtual Reality (VR) and Mixed Reality (MX), and the XR scenarios, requirements, Key Performance Indicators (KPI), and evaluation methods for XR have been discussed. The target requirement for XR is to consider aspects of capacity, latency (delay), mobility, and energy efficiency.

### Citation List

### Non-Patent Literature

NPL 1
   3GPP TS38.213 V16.3.0 (2020-09)
NPL 2
   3GPP TS38.331 V16.2.0 (2020-09)

### Summary of Invention

There is room for study on the configuration of a plurality of uplink signal occasions in large-capacity communication such as XR.

An aspect of the present disclosure is to provide a terminal and a communication method that each appropriately configure a plurality of uplink signal occasions in large-capacity communication.

### Solution to Problem

A terminal according to an aspect of the present disclosure includes: a reception section that receives a parameter of higher layer signaling; and a control section that determines activation and deactivation of transmission of an uplink signal, based on a downlink control signal and the parameter of the higher layer signaling, in which the control section determines each of a plurality of uplink signal occasions in a period based on individual time resource allocation information.

A terminal according to an aspect of the present disclosure includes: a reception section that receives a parameter of higher layer signaling; and a control section that determines activation and deactivation of transmission of an uplink signal, based on a downlink control signal and the parameter of the higher layer signaling, in which the control section determines each of a plurality of uplink signal occasions in a period based on one piece of time resource allocation information and a number of the plurality of uplink signal occasions.

In a communication method according to an aspect of the present disclosure, a terminal receives a parameter of higher layer signaling, determines activation and deactivation of transmission of an uplink signal, based on a downlink control signal and the parameter of the higher layer signaling, and determines each of a plurality of uplink signal occasions in a period based on individual time resource allocation information.

In a communication method according to an aspect of the present disclosure, a terminal receives a parameter of higher layer signaling, determines activation and deactivation of transmission of an uplink signal, based on a downlink control signal and the parameter of the higher layer signaling, and determines each of a plurality of uplink signal occasions in a period based on one piece of time resource allocation information and a number of the plurality of uplink signal occasions.

### Brief Description of Drawings

FIG. 1 illustrates an example of dual connectivity (DC);
FIG. 2 illustrates an example of PUCCH carrier switching;
FIG. 3 illustrates parameters of configuredGrantConfig;
FIG. 4 illustrates other parameters of configuredGrantConfig;
FIG. 5 illustrates an example of a TDRA table;
FIG. 6 is a block diagram illustrating an exemplary configuration of base station 10;
FIG. 7 is a block diagram illustrating an exemplary configuration of terminal 20;
FIG. 8 illustrates an exemplary hardware configuration of the base station and the terminal according to the present embodiment; and
FIG. 9 illustrates an exemplary configuration of vehicle 2001.

### Description of Embodiments

Hereinafter, an embodiment according to an aspect of the present disclosure will be described with reference to the drawings. In URLLC, the enhancement of the feedback function of a terminal for Hybrid Automatic Repeat request-Acknowledgement (HARQ-ACK) has been studied. The HARQ-ACK is an example of information on a confirmation response (e.g., acknowledgement) to data received by a terminal. For these study matters of URLLC, supporting dynamic and semi-static PUCCH carrier switching was agreed. Note that, the PUCCH carrier switching may be referred to by another name such as carrier switching for control information transmission.

The PUCCH carrier switching is a technique applied when a base station performs communication via a plurality of cells. Hereinafter, dual connectivity and PUCCH carrier switching, which are examples of communication via a plurality of cells, will be described.

### <Dual Connectivity>

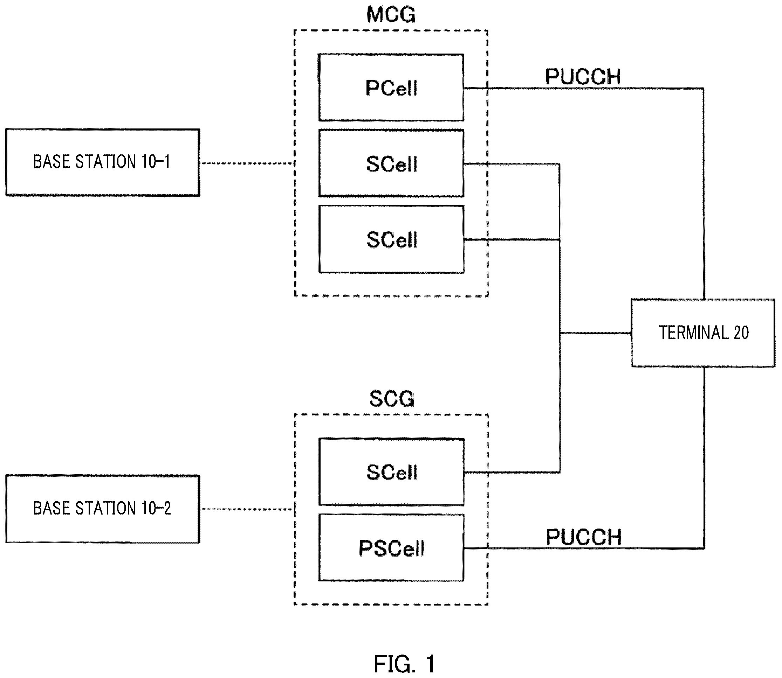

FIG. 1 illustrates an example of dual connectivity (DC). In the example of FIG. 1, base station 10-1 may be a Master Node (MN), and base station 10-2 may be a Secondary Node (SN). In DC, carriers between different base stations are bundled together as illustrated in the example of FIG. 1.

In the example of FIG. 1, base station 10-1 communicates with terminal 20 via a primary cell (Pcell) and secondary cells (Scells). In the example of FIG. 1, terminal 20 has established a Radio Resource Control (RRC) connection with base station 10-1.

In DC, a delay in communication may occur between base stations 10-1 and 10-2, and thus it is difficult to indicate uplink control information (e.g., Uplink Control Information (UCI)) received in the Pcell of base station 10-1 to base station 10-2 via a backhaul link (e.g., wired or wireless link connecting base stations 10-1 and 10-2) to reflect the uplink control information in scheduling of an Scell under base station 10-2. Then, in DC, in addition to the Pcell of base station 10-1, one carrier under base station 10-2 may be configured as a Primary Scell (PScell), and PUCCH transmission may be supported by the PScell. In this case, terminal 20 transmits UCI to base station 10-2 via the PScell.

In the example of FIG. 1, terminal 20 configures Scells in addition to the Pcell for base station 10-1. Furthermore, terminal 20 configures an Scell in addition to the PScell for base station 10-2. Terminal 20 transmits UCI for each carrier under base station 10-1 via a PUCCH in the Pcell. Furthermore, terminal 20 transmits UCI for each carrier under base station 10-2 via a PUCCH in the PScell. In the example of FIG. 1, a cell group (CG) under base station 10-1 may be referred to as a Master Cell-Group (MCG), and a cell group under base station 10-2 may be referred to as a Secondary Cell-Group (SCG).

When DC is performed, terminal 20 may transmit a PUCCH via a Pcell, PScell, and/or PUCCH-Scell. Generally, terminal 20 is not assumed to transmit a PUCCH via an Scell other than a Pcell, PScell, and PUCCH-Scell.

### <PUCCH Carrier Switching>

PUCCH carrier switching has been studied as a method for reducing latency in HARQ-ACK feedback in a Time Division Duplex (TDD) scheme.

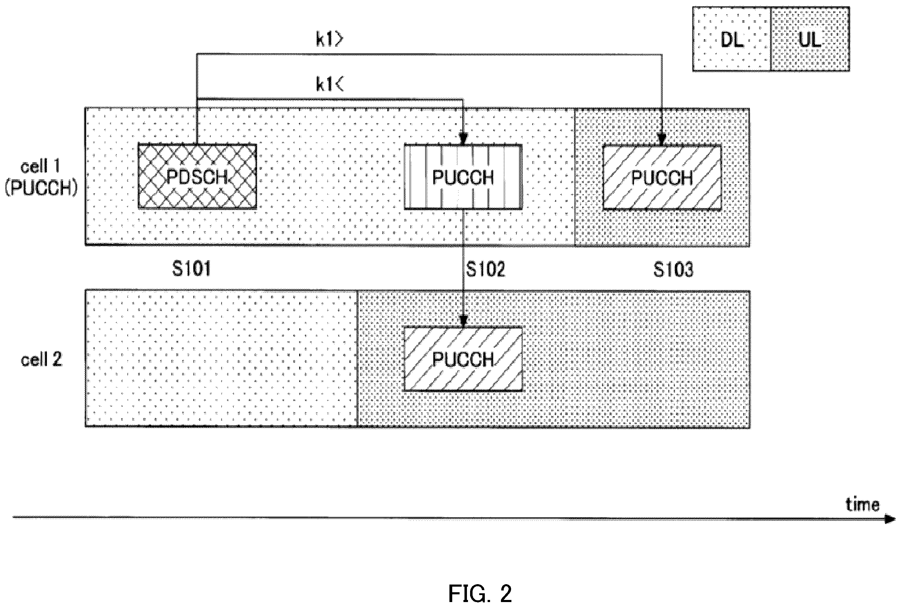

FIG. 2 illustrates an example of PUCCH carrier switching. In the example of FIG. 2, a base station and a terminal communicate with each other via cell 1 and cell 2. In the example of FIG. 2, cell 1 is a Pcell and cell 2 is an Scell. Furthermore, the example of FIG. 2 illustrates a downlink (DL) slot and an uplink (UL) slot in each cell.

In the example of FIG. 2, the terminal receives data (receives a Physical Downlink shared Channel (PDSCH)) at a timing of S101. The terminal attempts to transmit an HARQ-ACK for the data received at S101 at a timing of S102, but the slot in cell 1 at the timing of S102 is a downlink (DL) slot. Thus, in a case where the terminal transmits an HARQ-ACK in cell 1, the terminal holds the HARQ-ACK transmission until a PUCCH transmission timing in an uplink (UL) slot (e.g., timing of S103 in FIG. 2), so that latency in HARQ-ACK transmission increases. Note that a PUCCH transmission timing in an uplink (UL) slot may be referred to as a PUCCH transmission occasion.

In the example of FIG. 2, the slot in cell 2 at the timing of S102 is a UL slot. In the example of FIG. 2, the latency in HARQ-ACK transmission can be reduced if the terminal can transmit an HARQ-ACK for the data received at S101 on the PUCCH transmission occasion at the timing of S102 in cell 2. In URLLC, low latency in a radio section is especially required. Thus, in 3GPP, PUCCH carrier switching in which a terminal switches carriers for transmitting PUCCH has been studied as an extension of URLLC technology.

Note that, in the following embodiment, "the same timing" may be completely the same timing or may refer to that all or some of time resources (e.g., one or a plurality of symbol(s) (which may also be resources in time units shorter than a symbol) are the same or overlap.

PUCCH carrier switching may also refer to that, in a case where a terminal attempts to perform PUCCH transmission at a specific transmission timing in a Pcell (which may be PScell or PUCCH-Scell), since the slot in the Pcell (which may be PScell or PUCCH-Scell) at the specific transmission timing is a DL slot, the terminal switches the cell for performing PUCCH transmission from the Pcell (which may be PScell or PUCCH-Scell) to an Scell (which is Scell other than PScell in the case of PScell, and is Scell other than PUCCH-Scell in the case of PUCCH-Scell) of one or a plurality of Scell(s) in which a slot at the same timing as the specific transmission timing is a UL slot. Note that, in an embodiment of the present invention, the unit of the specific transmission timing is not limited to a slot. For example, the specific transmission timing may be a timing in units of subframes or in units of symbols.

Two methods have been studied for achieving PUCCH carrier switching. The first method is a method in which a base station dynamically indicates a carrier for performing PUCCH transmission to a terminal. The second method is a method in which a base station semi-statically configures a carrier for performing PUCCH transmission for a terminal. Note that, in the example described below, "PUCCH transmission" and "transmitting PUCCH" may refer to transmission of uplink control information via a PUCCH.

A terminal may indicate, to a base station, terminal capability information (UE capability) that specifies information on capability of the terminal related to PUCCH transmission.

For example, as the UE capability of a terminal, information indicating whether the terminal supports switching between configurations related to transmission of control information may be specified. Switching between configurations related to transmission of control information may be, for example, switching between resources (e.g., carriers or cells) to be used for transmitting control information. Switching between resources to be used for transmitting control information may also be referred to as "PUCCH carrier switching." Furthermore, as the UE capability of a terminal, information indicating application of dynamic PUCCH carrier switching and/or semi-static PUCCH carrier switching may be specified.

The configuration operation of the semi-static PUCCH carrier switching may be based on the RRC, which configures a PUCCH cell timing pattern for the PUCCH cell to which the semi-static PUCCH carrier switching is applied. Further, the configuration operation of the semi-static PUCCH carrier switching may be supported between cells with different numerologies.

In the PUCCH carrier switching, PUCCH resources may be configured per Uplink Bandwidth Part (UL BWP) (e.g., per candidate cell and per UL BWP of a candidate cell).

In the case of PUCCH carrier switching based on dynamic indication of control information, a K1 value (offset) from a PDSCH to an HARQ-ACK may be interpreted based on the numerology of a target PUCCH cell to be dynamically indicated. Note that the control information may be control information for scheduling a PUCCH, such as Downlink Control Information (DCI). Furthermore, the numerology may be regarded as a slot or a Subcarrier Spacing (SCS).

In URLLC, enhancement of HARQ-ACK Codebook (HARQ-ACK CB) feedback by a terminal has been studied. The following are overviews of Type 1 HARQ-ACK CB and Type 2 HARQ-ACK CB (for details, see NPL 1).

### <CG Enhancements in Rel-18 XR>

At RAN1 #111 meeting, it was agreed to support CG enhancements for Rel-18 XR.

### - Agreement

Dynamic indication of one or more unused CG PUSCH occasions based on Uplink Control Information (UCI) by a terminal is supported.

For example, when there is an unused CG PUSCH occasion, a terminal may indicate the unused CG PUSCH occasion using UCI.

### - Agreement

A plurality of CG PUSCH occasions (multiple CG PUSCHs) in a single CG PUSCH configuration period is supported.

For example, in a case where a plurality of CG PUSCHs is configured, a terminal may configure a plurality of CG PUSCH occasions in a period of one of the plurality of CG PUSCH configurations.

Note that the term "unused" may include the meaning of "non-used." The CG PUSCH occasion may be referred to as a CG PUSCH transmission occasion. The period of CG PUSCH configuration may be referred to as a CG PUSCH period or a CG period. The period may have periodicity.

### <CG PUSCH>

As described above, in NR, the configuration of CG PUSCH is specified in Rel-16 (e.g., NPL 2). The CG PUSCH includes Type 1 CG PUSCH and Type 2 CG PUSCH.

### - Type 1 CG PUSCH

Transmission parameters for Type 1 CG PUSCH are provided by "configuredGrantConfig," "pusch-Config," and "rrc-ConfiguredUplinkGrant." The activation/deactivation of Type 1 CG PUSCH depends on an RRC-configuration and does not depend on Downlink Control Information (DCI).

### - Type 2 CG PUSCH

Transmission parameters for Type 2 CG PUSCH are provided by "configuredGrantConfig," "pusch-Config," and "activation DCI." The activation/deactivation of Type 2 CG PUSCH depends on an RRC-configuration and DCI. One DCI can activate one CG PUSCH and can deactivate a plurality of CG PUSCHs.

### <CG PUSCH configurations>

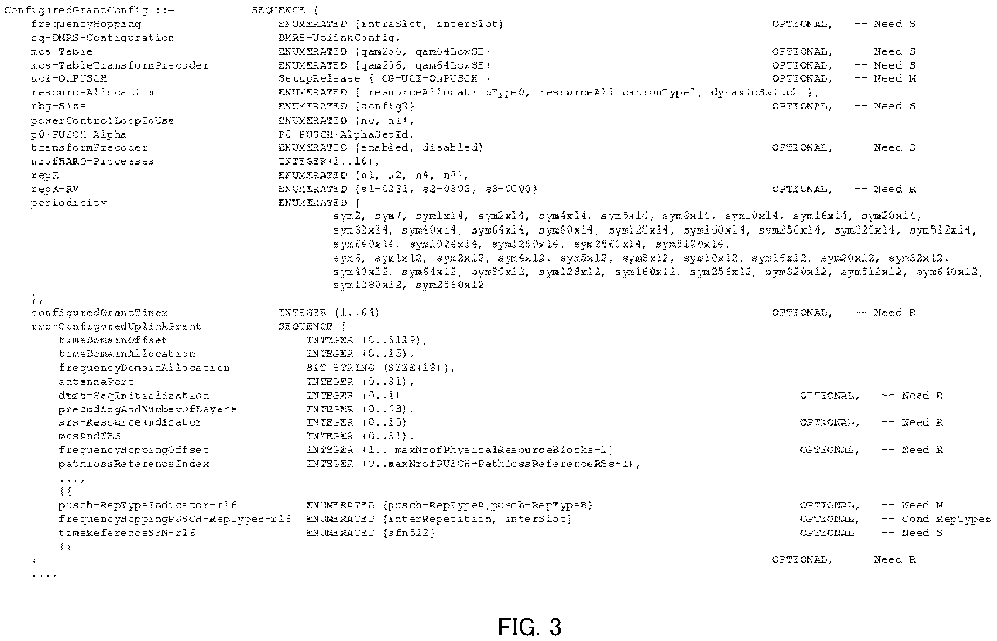

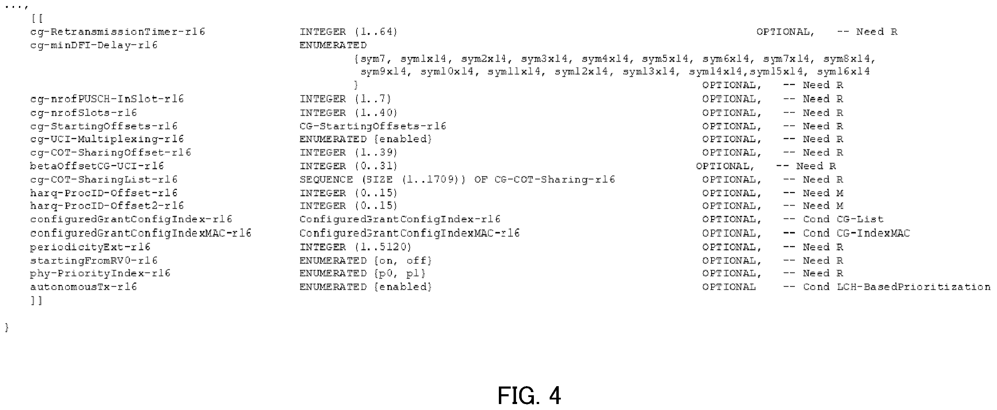

FIGS. 3 and 4 are diagrams illustrating parameters of configuredGrantConfig. The parameters illustrated in FIG. 4 follow the parameters illustrated in FIG. 3. The parameters of configuredGrantConfig in FIGS. 3 and 4 are used to configure configured grant uplink transmissions.

### <Validation of Activation DCI>

In Rel-17, in a case where a time domain resource assignment or allocation (TDRA) field in a DCI format indicates a row with a single Start and length Indicator Value (SLIV), a terminal validates a configured UL grant Type 2 PDCCH for scheduling activation or scheduling release (see, e.g., 3GPP TS38.213 V17.3.0, Section 10.2). In other words, a terminal cannot validate activation DCI in a case where DCI indicates a plurality of SLIVs by the TDRA field. Note that the SLIV defines a start symbol and the number of consecutive symbols.

### <Analysis>

As described in <CG Enhancements in Rel-18 XR> above, it was agreed to support CG enhancements for Rel-18 XR. However, regarding the large-capacity communication such as Rel-18 XR, there is room for study on the configuration of a plurality of CG PUSCH occasions in a single CG PUSCH configuration as described below.

### - Consideration 1

Configuration related to Type 1 CG PUSCH

### - Consideration 2

Configuration related to Type 2 CG PUSCH and validation of activation DCI

Note that, as described in <Validation of Activation DCI>, in the present specification, a terminal cannot validate activation DCI in a case where DCI indicates a plurality of SLIVs by the TDRA field.

### - Consideration 3

Possible limitations on a plurality of CG PUSCH occasions in a CG period.

Based on the above-described Considerations 1 to 3, Proposals 1 to 3 will be described below.

### <Proposal 1>

In Proposal 1, a plurality of CG PUSCH occasions in large-capacity communication is appropriately configured by specifying the configuration related to Type 1 CG PUSCH mentioned in Consideration 1. Proposal 1 may include Options 1 and 2.

### <Proposal 1-Option 1>

In Option 1 of Proposal 1, a plurality of CG PUSCH occasions in a CG period is not supported for a Type 1 CG PUSCH configuration.

### - Example 1

A terminal does not expect "timeDomainAllocation" in "rrc-ConfiguredUplinkGrant" indicating a plurality of SLIVs. The "rrc-ConfiguredUplinkGrant" is a parameter of RRC related to the configuration of uplink grant, and the "timeDomainAllocation" is a parameter related to time resource mapping.

### - Example 2

A terminal does not expect that an RRC parameter indicating the number of CG PUSCH occasions in a CG period is configured for Type 1 CG PUSCH.

In the operations of Examples 1 and 2 described above, for example, a base station may control enabling and disabling of a plurality of CG PUSCH occasions. It is herein assumed that a terminal can support a plurality of CG PUSCH occasions for Type 1 CG PUSCH.

When the base station disables the function of a plurality of CG PUSCH occasions for Type 1 CG PUSCH, the base station does not include "timeDomainAllocation" indicating a plurality of SLIVs in "rrc-ConfiguredUplinkGrant." Because "rrc-ConfiguredUplinkGrant" does not include "timeDomainAllocation" indicating a plurality of SLIVs, a terminal does not support a plurality of CG PUSCH occasions.

Furthermore, a base station does not configure the RRC parameter indicating the number of CG PUSCH occasions for Type 1 CG PUSCH. Because the RRC parameter indicating the number of CG PUSCH occasions is not configured for Type 1 CG PUSCH, a terminal does not support a plurality of CG PUSCH occasions.

Note that the term "expect" may be read as "assume" or "determine." Enabling and disabling may be read as activation and deactivation, respectively.

### <Proposal 1-Option 2>

In Option 2 of Proposal 1, a plurality of CG PUSCH occasions in a CG period is supported for a Type 1 CG PUSCH configuration.

### - Example 1.

When "timeDomainAllocation" in "rre-ConfiguredUplinkGrant" indicates a plurality of SLIVs, a terminal expects (supports) a plurality of CG PUSCH occasions in a CG period.

### - Example 2

A terminal expects (supports) a plurality of CG PUSCH occasions in a CG period in a case where the number of CG PUSCH occasions in a CG period is configured for Type 1 CG PUSCH.

In Example 1 or 2, when expecting a plurality of CG PUSCH occasions, a terminal expects one or more of the following conditions to be satisfied. Conditions may be read as states.

### - Condition 1

Dynamic indication of unused CG PUSCH occasions is enabled for a Type 1 CG PUSCH configuration.

### - Condition 2

The physical priority of a Type 1 CG PUSCH configuration is indicated as either High or Low.

For example, "phy-PriorityIndex" of "ConfiguredGrantConfig" is not configured. In this case, the physical priority of the Type 1 CG PUSCH configuration is configured as Low for a terminal.

For example, "phy-PriorityIndex" of "ConfiguredGrantConfig" is not configured as "0." Alternatively, "phy-PriorityIndex" of "ConfiguredGrantConfig" is not configured as "1."

### - Condition 3

Repetition (Type A or Type B) is not configured for a Type 1 CG PUSCH configuration.

For example, "rep-K" is not configured in "ConfiguredGrantConfig." Alternatively, "rep-K" is set to "1." Note that the "rep-K" is a parameter indicating the number of repetitions of CG PUSCH.

For example, "pusch-RepTypeIndicator" is not configured in "rrc-ConfiguredUplinkGrant."

For example, "pusch-RepTypeIndicator" is not configured as 'pusch-RepTypeA' in "rrc-ConfiguredUplinkGrant." Alternatively, "pusch-RepTypeIndicator" is not configured as 'pusch-RepTypeB' in "rrc-ConfiguredUplinkGrant."

Note that "pusch-RepTypeIndicator" is a parameter indicating a type of repetition. Repetition type A may be interpreted as a form in which a PUSCH allocated in a slot is repeatedly transmitted. In other words, the PUSCH is 14 symbols or less, and there is no possibility that the PUSCH is allocated across a plurality of slots (adjacent slots).

On the other hand, Repetition type B may be interpreted as a repetitive PUSCH transmission in which a PUSCH with 15 symbols or more is possibly allocated. In the present embodiment, allocation of such a PUSCH across a plurality of slots may be allowed.

### - Condition 4

Multi-TPR transmission is not configured for a Type 1 CG PUSCH configuration. TPR is an abbreviation for a Transmission and Reception Point.

For example, "pathlossReferenceIndex2," "srs-ResourceIndicator2," and/or "precodingAndNumberOfLayers2" are not configured in "rrc-ConfiguredUplinkGrant." In other words, a parameter related to a second SRS is not configured for a terminal. SRS is an abbreviation for a Sounding Reference Signal.

Note that "pathlossReferenceIndex2" is a parameter indicating a reference signal used as a PUSCH path loss reference of the second SRS resource set. The "srs-ResourceIndicator2" is a parameter indicating an SRS resource used for the second SRS resource set. The "precodingAndNumberOfLayers2" is a parameter indicating the precoding and the number of layers of the second SRS resource set.

### - Condition 5

In "rrc-ConfiguredUplinkGrant," "cg-SDT-Configuration" is not configured.

The "cg-SDT-Configuration" is a parameter related to the configuration of SDT. SDT is an abbreviation for Small Data Transmission. In SDT, CG PUSCH is transmitted in an RRC inactive state.

### - Condition 6

The period of CG PUSCH is greater than X symbols. Alternatively, the period of CG PUSCH is greater than the number of slots of an indicated plurality of SLIVs. In other words, the period of CG PUSCH is configured so that the configured plurality of CG PUSCH occasions is transmitted within the CG period.

### - Variation

A terminal may transmit a single PUSCH occasion in a CG period in a case where one or more of the above-described conditions are not satisfied.

### <Summary of Proposal 1>

A terminal determines whether to support a plurality of CG PUSCH occasions for Type 1 CG PUSCH in a period, based on a parameter of higher layer signaling. This operation allows the terminal to appropriately configure a plurality of CG PUSCH occasions in large-capacity communication.

### <Proposal 2>

In Proposal 2, a plurality of CG PUSCH occasions in large-capacity communication is appropriately configured by specifying the configuration related to Type 2 CG PUSCH and the validation of activation DCI mentioned in Consideration 2.

In Proposal 2, a plurality of CG PUSCH occasions in a CG period is supported for a Type 2 CG PUSCH configuration. Proposal 2 includes the following Assumptions 1 and 2.

### <Proposal 2-Assumption 1>

TDRA for a plurality of CG PUSCH occasions in a CG period is indicated by individual SLIVs in a TDRA row.

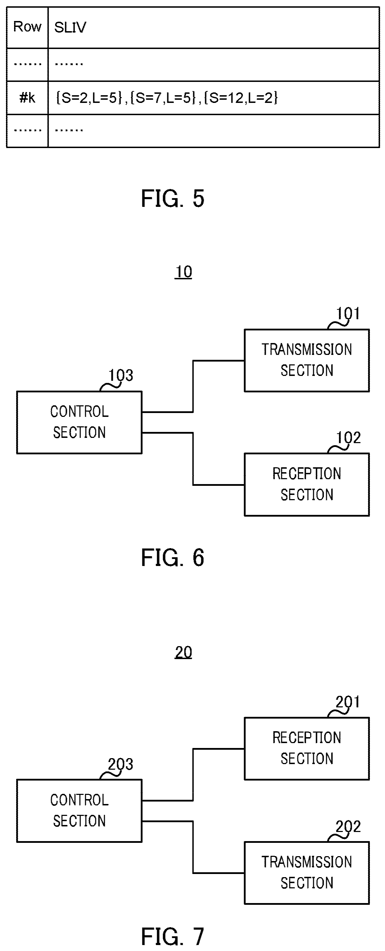

FIG. 5 illustrates an exemplary TDRA table. For example, the TDRA table illustrated in FIG. 5 is semi-statically entered in a terminal by a parameter such as RRC. As illustrated in FIG. 5, the TDRA table includes a plurality of SLIVs in one row. The plurality of SLIVs corresponds to SLIVs for a plurality of CG PUSCH occasions.

In a case where DCI (TDRA field) indicates a TDRA row index indicating one or a plurality of SLIVs, a terminal validates the DCI as activation DCI for Type 2 CG PUSCH. The terminal determines a plurality of CG PUSCH occasions (e.g., slots) in a CG period based on the plurality of SLIVs.

In a case where a terminal can validate DCI as activation DCI indicating a TDRA row index that indicates a plurality of SLIVs, and transmits a plurality of CG PUSCH occasions in a CG period based on the plurality of SLIVs, the terminal expects that one or more of the following conditions are satisfied.

### - Condition 1

Dynamic indication of unused CG PUSCH occasions is enabled for a Type 2 CG PUSCH configuration.

### - Condition 2

The physical priority of a Type 1 CG PUSCH configuration is indicated as either High or Low.

For example, "phy-PriorityIndex" of "ConfiguredGrantConfig" is not configured. In this case, the physical priority of the Type 1 CG PUSCH configuration is configured as Low for a terminal.

For example, "phy-PriorityIndex" of "ConfiguredGrantConfig" is not configured as "0." Alternatively, "phy-PriorityIndex" of "ConfiguredGrantConfig" is not configured as "1."

### - Condition 3

Repetition (Type A or Type B) is not configured for a Type 2 CG PUSCH configuration.

For example, "numberOfRepetitions" is present in the TDRA table. Alternatively, "rep-K" is not configured in "ConfiguredGrantConfig."

For example, in a case where the activation DCI format is DCI 0_1 or DCI 0_2, "pusch-RepTypeIndicatorDCI-0-1" or "pusch-RepTypeIndicatorDCI-0-2" in "PUSCH-Config" is not configured. Alternatively, in a case where the activation DCI format is DCI 0_1 or DCI 0_2, these parameters are not configured as 'pusch-RepTypeA' or 'pusch-RepTypeB.'

Note that "PUSCH-Config" is an information element used to configure a terminal-specific PUSCH parameter applicable to a particular Band Width Part (BWP). The "pusch-RepTypeIndicatorDCI-0-1"/"pusch-RepTypeIndicatorDCI-0-2" are parameters indicating whether a terminal follows the operation of "Repetition type A" or the operation of "Repetition type B" regarding PUSCH scheduled by DCI format 0_1/0_2.

### - Condition 4

Multi-TPR transmission is not configured for a Type 2 CG PUSCH configuration.

For example, the value of an SRS resource set indicator field of activation DCI indicates '00' or '01.' In other words, the value of an SRS resource set indicator field of activation DCI indicates a certain TPR.

For example, "powerControlLoopToUse2" and/or "mappingPattern" are not configured in "ConfiguredGrantConfig."

Note that "powerControlLoopToUse2" is a parameter related to a closed control loop applied to the second SRS resource set. The "mappingPattern" is a parameter that indicates whether a terminal should follow a Cyclical mapping pattern or a Sequential mapping pattern when two SRS resource sets are configured.

### - Condition 5

The period of CG PUSCH is greater than X symbols. Alternatively, the period of CG PUSCH is greater than the number of slots of an indicated plurality of SLIVs. In other words, the period of CG PUSCH is configured so that the configured plurality of CG PUSCH occasions is transmitted within the CG period.

### - Variation

A terminal may validate DCI as activation DCI in a case where any one or more of the above-described conditions are not satisfied. The terminal may then transmit only one CG PUSCH occasion in a CG period based on the first or last SLIV.

### <Proposal 2-Assumption 2>

The TDRA of a plurality of CG PUSCH occasions in a CG period is determined based on the TDRA of the first CG PUSCH occasion and the number of CG PUSCH occasions in a CG period. Assumption 2 of Proposal 2 is further classified into two Assumptions 2-1 and 2-1.

### <Proposal 2-Assumption 2-1>

The number of CG PUSCH occasions in a CG period is indicated by activation DCI.

For example, a terminal expects the TDRA of the first CG PUSCH occasion and the number of a plurality of CG PUSCH occasions based on activation DCI. The terminal determines the TDRA of CG PUSCH occasions after the first CG PUSCH occasion based on the TDRA of the first CG PUSCH occasion and the number of the plurality of CG PUSCH occasions.

In a case where a terminal can validate DCI as activation DCI indicating the number of CG PUSCH occasions in a CG period, and transmits, in a CG period, a plurality of CG PUSCH occasions that are based on one SLIV or the first SLIV among a plurality of SLIVs, the terminal expects that one or more of the following conditions are satisfied.

### - Condition 1

Enabling a plurality of CG PUSCH occasions in a CG period is configured for a Type 2 CG PUSCH configuration.

### - Condition 2

Dynamic indication of unused CG PUSCH occasions is enabled for a Type 2 CG PUSCH configuration.

### - Condition 3

The physical priority of a Type 1 CG PUSCH configuration is indicated as either High or Low.

For example, "phy-PriorityIndex" of "ConfiguredGrantConfig" is not configured. In this case, the physical priority of the Type 1 CG PUSCH configuration is configured as Low for a terminal.

For example, "phy-PriorityIndex" of "ConfiguredGrantConfig" is not configured as "0." Alternatively, "phy-PriorityIndex" of "ConfiguredGrantConfig" is not configured as "1."

### - Condition 4

Repetition (Type A or Type B) is not configured for a Type 2 CG PUSCH configuration.

For example, "numberOfRepetitions" is present in the TDRA table. Alternatively, "rep-K" is not configured in "ConfiguredGrantConfig."

For example, in a case where the activation DCI format is DCI 0_1 or DCI 0_2, "pusch-RepTypeIndicatorDCI-0-1" or "pusch-RepTypeIndicatorDCI-0-2" in "PUSCH-Config" is not configured. Alternatively, in a case where the activation DCI format is DCI 0_1 or DCI 0_2, these parameters are not configured as 'pusch-RepTypeA' or 'pusch-RepTypeB.'

### - Condition 5

Multi-TPR transmission is not configured for a Type 2 CG PUSCH configuration.

For example, the value of an SRS resource set indicator field of activation DCI indicates '00' or '01.' In other words, the value of an SRS resource set indicator field of activation DCI indicates a certain TPR.

For example, "powerControlLoopToUse2" and/or "mappingPattern" are not configured in "ConfiguredGrantConfig."

### - Condition 6

The period of CG PUSCH is greater than X symbols. Alternatively, the period of CG PUSCH is greater than the number of slots of an indicated plurality of SLIVs. In other words, the period of CG PUSCH is configured so that the configured plurality of CG PUSCH occasions is transmitted within the CG period.

### - Variation

A terminal may validate DCI as activation DCI in a case where any one or more of the above-described conditions are not satisfied. The terminal may then transmit only one CG PUSCH occasion in a CG period.

### <Proposal 2-Assumption 2-2>

The number of CG PUSCH occasions in one CG period is indicated by a Type 2 CG PUSCH configuration. For example, the number of CG PUSCH occasions in one CG period is indicated by a parameter of higher layer signaling such as "ConfiguredGrantConfig."

When the number of CG PUSCH occasions in a CG period is configured in "ConfiguredGrantConfig," the terminal expects that one or more of the following conditions are satisfied.

### - Condition 1

Dynamic indication of unused CG PUSCH occasions is enabled for a Type 2 CG PUSCH configuration.

### - Condition 2

The physical priority of a Type 1 CG PUSCH configuration is indicated as either High or Low.

For example, "phy-PriorityIndex" of "ConfiguredGrantConfig" is not configured. In this case, the physical priority of the Type 1 CG PUSCH configuration is configured as Low for a terminal.

For example, "phy-PriorityIndex" of "ConfiguredGrantConfig" is not configured as "0." Alternatively, "phy-PriorityIndex" of "ConfiguredGrantConfig" is not configured as "1."

### - Condition 3

Repetition (Type A or Type B) is not configured for a Type 2 CG PUSCH configuration.

For example, "numberOfRepetitions" is present in the TDRA table. Alternatively, "rep-K" is not configured in "ConfiguredGrantConfig."

For example, in a case where the activation DCI format is DCI 0_1 or DCI 0_2, "pusch-RepTypeIndicatorDCI-0-1" or "pusch-RepTypeIndicatorDCI-0-2" in "PUSCH-Config" is not configured. Alternatively, in a case where the activation DCI format is DCI 0_1 or DCI 0_2, these parameters are not configured as 'pusch-RepTypeA' or 'pusch-RepTypeB.'

### - Condition 4

Multi-TPR transmission is not configured for a Type 2 CG PUSCH configuration.

For example, the value of an SRS resource set indicator field of activation DCI indicates '00' or '01.' In other words, the value of an SRS resource set indicator field of activation DCI indicates a certain TPR.

For example, "powerControlLoopToUse2" and/or "mappingPattern" are not configured in "ConfiguredGrantConfig."

### - Condition 5

The period of CG PUSCH is greater than X symbols. Alternatively, the period of CG PUSCH is greater than the number of slots of an indicated plurality of SLIVs. In other words, the period of CG PUSCH is configured so that the configured plurality of CG PUSCH occasions is transmitted within the CG period.

### - Variation

A terminal may transmit one CG PUSCH occasion in a CG period in a case where one or more of the above-described conditions are not satisfied.

### <Summary of Proposal 2>

A terminal determines each of a plurality of CG PUSCH occasions for Type 2 CG PUSCH in a period, based on individual TDRAs. This operation allows the terminal to appropriately configure a plurality of CG PUSCH occasions in large-capacity communication.

Furthermore, a terminal determines each of a plurality of CG PUSCH occasions for Type 2 CG PUSCH in a period, based on the TDRA of the first CG PUSCH occasion and the number of a plurality of CG PUSCH occasions. This operation allows the terminal to appropriately configure a plurality of CG PUSCH occasions in large-capacity communication.

### <Proposal 3>

In Proposal 3, a plurality of CG PUSCH occasions in large-capacity communication is appropriately configured by specifying a limitation on a plurality of CG PUSCH occasions in a CG period mentioned in Consideration 3. Proposal 3 may include Options 1 and 2.

### <Proposal 3-Option 1>

In a case where "rep-K" is set to a value K in "ConfiguredGrantConfig" and a terminal determines a plurality of PUSCH occasions in a CG period for CG PUSCH configuration as described in Proposals 1 and 2, the terminal performs the transmission operations of the following Alt.1 to Alt.3.

Furthermore, in a case where "numberOfRepetitions" is present in the TDRA table and a terminal determines a plurality of PUSCH occasions in a CG period for CG PUSCH configuration as described in Proposals 1 and 2, the terminal performs the transmission operations of the following Alt.1 to Alt.3.

### <Proposal 3-Option 1-Alt.1>

In Alt.1 of Proposal 3, a joint operation of repetition and a plurality of CG PUSCH occasions in a CG period is not allowed, and the plurality of CG PUSCH occasions is prioritized over the repetition.

For example, each of the plurality of CG PUSCH occasions includes only one repetition. For example, a terminal transmits a plurality of CG PUSCH occasions in a CG period, and performs one repetition in each of the plurality of CG PUSCH occasions.

### <Proposal 3-Option 1-Alt.2>

In Alt.2 of Proposal 3, a joint operation of repetition and a plurality of CG PUSCH occasions in a CG period is allowed.

For example, each of the plurality of CG PUSCH occasions includes K repetitions. For example, a terminal transmits a plurality of CG PUSCH occasions in a CG period, and performs K repetitions in each of the plurality of CG PUSCH occasions. Assuming that the number of the plurality of CG PUSCH occasions is N, the terminal transmits PUSCH N*K times in a CG period.

### <Proposal 3-Option 1-Alt.3>

In Alt.3 of Proposal 3, a joint operation of repetition and a plurality of CG PUSCH occasions in a CG period is not allowed, and the repetition is prioritized over the plurality of CG PUSCH occasions.

For example, one CG PUSCH occasion is transmitted in one CG period, and the one CG PUSCH occasion includes K repetitions. For example, a terminal transmits one CG PUSCH occasion in one CG period, and performs K repetitions in the one CG PUSCH occasion.

### <Proposal 3-Option 2>

Option 2 of Proposal 3 describes another possible variation of TDRA for a plurality of CG PUSCH occasions in one CG period.

### - Example 1.

The number of CG PUSCH occasions in one slot is limited to a maximum of X.

### - Example 2

A plurality of CG PUSCH occasions in one CG period is limited to a maximum of Y slots.

### - Variation

The values of X and/or Y may be defined by specifications. The values of X and/or Y may be configured by a parameter of higher layer signaling such as RRC. The values of X and/or Y may be reported by terminal capability information (UE capability).

The candidate values for X and/or Y may depend on a frequency range (e.g., FR1, FR2-1, FR2-2), SCS (e.g., 15/30/60/120/240/960 kHz SCS), the number of CG PUSCH configurations, and/or the value of periodicity of CG PUSCH configuration.

### <Summary of Proposal 3>

A terminal determines a CG PUSCH occasion in a period and repetition in the CG PUSCH occasion based on a parameter of higher layer signaling. This operation allows for appropriate configuration of a plurality of CG PUSCH occasions in large-capacity communication.

Furthermore, regarding TDRA, the number of CG PUSCH occasions in one slot is limited to a maximum of X for a terminal. This operation allows for appropriate configuration of a plurality of CG PUSCH occasions in large-capacity communication.

Furthermore, regarding TDRA, a plurality of CG PUSCH occasions in a CG period is limited to a maximum of Y slots for a terminal. This operation allows for appropriate configuration of a plurality of CG PUSCH occasions in large-capacity communication.

### <Variation>

The number of CG PUSCH occasions in a CG period may be dynamically updated for a terminal. TDRA for a plurality of CG PUSCH occasions in a CG period may be dynamically updated for a terminal. The dynamic update may be performed by existing DCI, new DCI, activation DCI, and/or a MAC-CE. MAC CE is an abbreviation for a Media Access Control Control Element.

Which proposal, option, and/or Alt. are used may be configured by a parameter of higher layer signaling. Which proposal, option, and/or Alt. are used may be reported by a terminal as terminal capability information. Which proposal, option, and/or Alt. are used may be defined by specifications. Which proposal, option, and/or Alt. are used may be defined by a combination of a parameter of higher layer signaling, terminal capability information, and specifications.

### <Terminal Capability>

A terminal may report the following terminal capability information to a base station:
- Information defining whether to support the joint operation of PUSCH repetition and a plurality of CG PUSCH occasions in a CG period
- Prerequisite functions and/or capabilities for terminal capabilities for a plurality of CG PUSCH occasions in a CG period including one or more of the following
   - - A single DCI (Rel-17 capability) that schedules a plurality of PUSCHs
   - - Multiple active configured grant configurations for the BWP of a Serving Cell
   - - Report of dynamic indication of unused CG PUSCH occasions by UCI

### <Configuration of Base Station>

FIG. 6 is a block diagram illustrating an exemplary configuration of base station 10. Base station 10 includes, for example, transmission section 101, reception section 102, and control section 103. Base station 10 communicates with terminal 20 (see FIG. 7) by radio.

Transmission section 101 transmits a downlink (DL) signal to terminal 20. For example, transmission section 101 transmits the DL signal under the control of control section 103.

The DL signal may include, for example, a downlink data signal and control information (e.g., Downlink Control Information (DCI)). The DL signal may also include information indicating scheduling related to signal transmission of terminal 20 (e.g., UL grant). Furthermore, the DL signal may include higher layer control information (e.g., control information of Radio Resource Control (RRC)). Moreover, the DL signal may include a reference signal.

Channels used for DL signal transmission include, for example, data channels and control channels. For example, the data channels may include a Physical Downlink Shared Channel (PDSCH) and the control channels may include a Physical Downlink Control Channel (PDCCH). For example, base station 10 transmits control information to terminal 20 using a PDCCH and transmits a downlink data signal using a PDSCH.

The reference signal included in the DL signal may include, for example, at least one of a Demodulation Reference Signal (DMRS), a Phase Tracking Reference Signal (PTRS), a Channel State Information-Reference Signal (CSI-RS), a Sounding Reference Signal (SRS), and a Positioning Reference Signal (PRS) for position information. For example, the reference signals such as the DMRS and the PTRS are used for demodulation of a downlink data signal and are transmitted using a PDSCH.

Reception section 102 receives an uplink (UL) signal transmitted from terminal 20. For example, reception section 102 receives the UL signal under the control of control section 103.

Control section 103 controls communication operations of base station 10 including transmission processing in transmission section 101 and reception processing in reception section 102.

For example, control section 103 acquires information such as data and control information from a higher layer and outputs the information to transmission section 101. Further, control section 103 outputs the data, the control information, and the like received from reception section 102 to a higher layer.

For example, control section 103 allocates a resource (or channel) to be used for DL signal transmission and reception and/or a resource to be used for UL signal transmission and reception, based on the signal (e.g., data, control information, and the like) received from terminal 20 and/or data, control information, and the like acquired from the higher layer. Information on the allocated resource(s) may be included in the control information to be transmitted to terminal 20.

Control section 103 configures a PUCCH resource as an exemplary resource allocation to be used for UL signal transmission and reception. Information on the PUCCH configuration such as a PUCCH cell timing pattern (PUCCH configuration information) may be indicated to terminal 20 by RRC.

### <Configuration of Terminal>

FIG. 7 is a block diagram illustrating an exemplary configuration of terminal 20. Terminal 20 includes, for example, reception section 201, transmission section 202, and control section 203. Terminal 20 communicates with base station 10 by radio, for example.

Reception section 201 receives a DL signal transmitted from base station 10. For example, reception section 201 receives the DL signal under the control of control section 203.

Transmission section 202 transmits a UL signal to base station 10. For example, transmission section 202 transmits the UL signal under the control of control section 203.

The UL signal may include, for example, an uplink data signal and control information (e.g., UCI). For example, information on processing capability of terminal 20 (e.g., UE capability) may also be included. Further, the UL signal may include a reference signal.

Channels used for UL signal transmission include, for example, data channels and control channels. For example, the data channels includes a Physical Uplink Shared Channel (PUSCH) and the control channels includes a Physical Uplink Control Channel (PUCCH). For example, terminal 20 receives control information from base station 10 using a PUCCH and transmits an uplink data signal using a PUSCH.

The reference signal included in the UL signal may include, for example, at least one of a DMRS, a PTRS, a CSI-RS, an SRS, and a PRS. For example, the reference signals such as the DMRS and the PTRS are used for demodulation of an uplink data signal and are transmitted using an uplink channel (e.g., PUSCH).

Control section 203 controls communication operations of terminal 20 including reception processing in reception section 201 and transmission processing in transmission section 202.

For example, control section 203 acquires information such as data and control information from a higher layer and outputs the information to transmission section 202. Further, control section 203 outputs, for example, data and control information received from reception section 201 to a higher layer.

For example, control section 203 controls transmission of information to be fed back to base station 10. The information to be fed back to base station 10 may include, for example, an HARQ-ACK, Channel. State Information (CSI), and/or a Scheduling Request (SR). The information to be fed back to base station 10 may be included in UCI. The UCI is transmitted in a PUCCH resource.

Control section 203 configures a PUCCH resource based on the configuration information received from base station 10 (e.g., configuration information such as a PUCCH cell timing pattern indicated by RRC and/or DCI). Control section 203 determines the PUCCH resource to be used for transmitting the information to be fed back to base station 10. Under the control of control section 203, transmission section 202 transmits the information to be fed back to base station 10 in the PUCCH resource determined by control section 203.

Note that, the channels used for DL signal transmission and the channels used for UL signal transmission are not limited to the examples mentioned above. For example, the channels used for DL signal transmission and the channels used for UL signal transmission may include a Random Access Channel (RACH) and a Physical Broadcast Channel (PBCH). The RACH may be used for, for example, transmission of Downlink Control Information (DCI) including a Random Access Radio Network Temporary Identifier (RA-RNTI).

Control section 203 determines whether to support a plurality of uplink signal occasions for Type 1 CG PUSCH in a period, based on a parameter of higher layer signaling. For example, in a case where "rrc-ConfiguredUplinkGrant" does not include "timeDomainAllocation" indicating a plurality of SLIVs, control section 203 determines not to support a plurality of uplink signal occasions for Type 1 CG PUSCH in a period. In a case where "rrc-ConfiguredUplinkGrant" includes "timeDomainAllocation" indicating a plurality of SLIVs, control section 203 determines to support a plurality of uplink signal occasions for Type 1 CG PUSCH in a period.

When determining not to support a plurality of uplink signal occasions for Type 1 CG PUSCH, control section 203 assumes that one or more of the conditions described in <Proposal 1- Option 2> are satisfied.

Furthermore, control section 203 determines each of the plurality of uplink signal occasions in a period based on individual time resource allocation information. When control section 203 determines each of the plurality of uplink signal occasions in a period based on the individual time resource allocation information, and transmits the plurality of uplink signal occasions, control section 203 assumes that one or more of the conditions described in <Proposal 2- Assumption 1> are satisfied.

Moreover, control section 203 determines each of the plurality of uplink signal occasions in a period based on one piece of time resource allocation information and the number of the plurality of uplink signal occasions. The one piece of time resource allocation information may be resource allocation information on the first occasion of the plurality of uplink signal occasions.

The number of CG PUSCH occasions in a CG period may be indicated by activation DCI. In this case, control section 203 assumes that one or more of the conditions described in <Proposal 2-Assumption 2-1> are satisfied. Furthermore, the number of CG PUSCH occasions in a CG period is indicated by a Type 2 CG PUSCH configuration. In this case, control section 203 assumes that one or more of the conditions described in <Proposal 2-Assumption 2-2> are satisfied.

Moreover, control section 203 determines an uplink signal occasion in one period and repetition in the uplink signal occasion based on a parameter of higher layer signaling.

In addition, regarding the determination of the time resource allocation information, control section 203 is limited on the number of CG PUSCH occasions in one slot to a maximum of X.

Furthermore, regarding the determination of the time resource allocation information, control section 203 is limited on a plurality of CG PUSCH occasions in one CG period to a maximum of Y slots.

The present disclosure has been described thus far. It should be noted that the classification of items in the above description is not essential for the present disclosure, and the matters described in two or more items may be used in combination as necessary, or a matter described in a certain item may be applied to a matter described in another item (unless inconsistency occurs).

### <Hardware Structure>

Note that the block diagrams that have been used to describe the above embodiments show blocks in functional units. These functional blocks (components) may be implemented in arbitrary combinations of at least one of hardware and software. Also, the method for implementing each functional block is not particularly limited. That is, each functional block may be realized by one piece of apparatus that is physically or logically coupled, or may be realized by directly or indirectly connecting two or more physically or logically separate pieces of apparatus (for example, via wire, wireless, or the like) and using these plurality of pieces of apparatus. The functional blocks may be implemented by combining software into the apparatus described above or the plurality of apparatuses described above.

Functions include judgment, determination, decision, calculation, computation, processing, derivation, investigation, search, confirmation, reception, transmission, output, access, resolution, selection, designation, establishment, comparison, assumption, expectation, considering, broadcasting, notifying, communicating, forwarding, configuring, reconfiguring, allocating (mapping), assigning, and the like, but function are by no means limited to these. For example, functional block (components) to implement a function of transmission may be referred to as a "transmitting section (transmitting unit)," a "transmitter," and the like. The method for implementing each component is not particularly limited as described above.

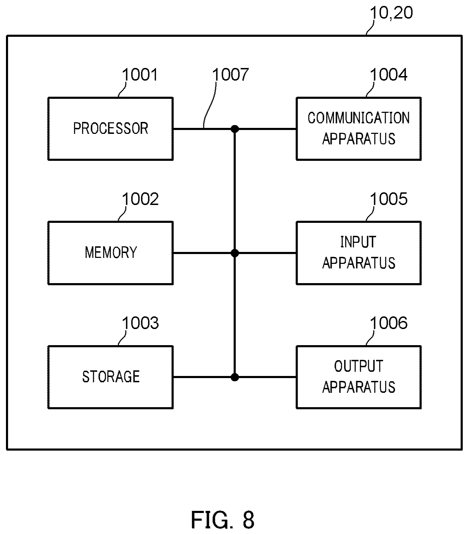

For example, a base station, a terminal, and so on according to one embodiment of the present disclosure may function as a computer that executes the processes of the radio communication method of the present disclosure. FIG. 8 is a diagram to show an example of a hardware structure of a base station and a terminal according to the present embodiment. Physically, the above-described base station 10 and terminal 20 may each be formed as a computer apparatus that includes processor 1001, memory 1002, storage 1003, communication apparatus 1004, input apparatus 1005, output apparatus 1006, bus 1007, and so on.

Note that in the present disclosure, the words such as an apparatus, a circuit, a device, a section, a unit, and so on can be interchangeably interpreted. The hardware structure of base station 10 and terminal 20 may be configured to include one or more of apparatuses shown in the drawings, or may be configured not to include part of apparatuses.

Each function of base station 10 and terminals 20 is implemented, for example, by allowing certain software (programs) to be read on hardware such as processor 1001 and memory 1002, and by allowing processor 1001 to perform calculations to control communication via communication apparatus 1004 and control at least one of reading and writing of data in memory 1002 and storage 1003.

Processor 1001 controls the whole computer by, for example, running an operating system. Processor 1001 may be configured with a central processing unit (CPU), which includes interfaces with peripheral apparatus, control apparatus, computing apparatus, a register, and so on. For example, at least part of above-described control section 103, control section 203, and so on may be implemented by processor 1001.

Furthermore, processor 1001 reads programs (program codes), software modules, data, and so on from at least one of storage 1003 and communication apparatus 1004, into memory 1002, and executes various processes according to these. As for the programs, programs to allow computers to execute at least part of the operations of the above-described embodiments are used. For example, control section 203 of terminal 20 may be implemented by control programs that are stored in memory 1002 and that operate on processor 1001, and other functional blocks may be implemented likewise. The various processes have been described to be performed by single processor 1001. However, the processes may be performed by two or more processors 1001 simultaneously or sequentially. Processor 1001 may be implemented by one or more chips. It should be noted that the program may be transmitted from a network via a telecommunication line.

Memory 1002 is a computer-readable recording medium, and may be constituted with, for example, at least one of a Read Only Memory (ROM), an Erasable Programmable ROM (EPROM), an Electrically EPROM (EEPROM), a Random Access Memory (RAM), and other appropriate storage media. Memory 1002 may be referred to as a "register," a "cache," a "main memory (primary storage apparatus)" and so on. Memory 1002 can store executable programs (program codes), software modules, and the like for implementing the radio communication method according to one embodiment of the present disclosure.

Storage 1003 is a computer-readable recording medium, and may be constituted with, for example, at least one of a flexible disk, a floppy (registered trademark) disk, a magneto-optical disk (for example, a compact disc (Compact Disc ROM (CD-ROM) and so on), a digital versatile disc, a Blu-ray (registered trademark) disk), a removable disk, a hard disk drive, a smart card, a flash memory device (for example, a card, a stick, and a key drive), a magnetic stripe, a database, a server, and other appropriate storage media. Storage 1003 may be referred to as "auxiliary storage apparatus." The above recording medium may be a database including memory 1002 and/or storage 1003, a server, or any other appropriate medium.

Communication apparatus 1004 is hardware (transmitting/receiving device) for allowing inter-computer communication via at least one of wired and wireless networks, and may be referred to as, for example, a "network device," a "network controller," a "network card," a "communication module," and so on. Communication apparatus 1004 may be configured to include a high frequency switch, a duplexer, a filter, a frequency synthesizer, and so on in order to realize, for example, at least one of frequency division duplex (FDD) and time division duplex (TDD). For example, the above-described transmission section 101, reception section 102, reception section 201, transmission section 202, and the like, may be realized by communication apparatus 1004.

Input apparatus 1005 is an input device that receives input from the outside (for example, a keyboard, a mouse, a microphone, a switch, a button, a sensor, and so on). Output apparatus 1006 is an output device that allows sending output to the outside (for example, a display, a speaker, a Light Emitting Diode (LED) lamp, and so on). Note that input apparatus 1005 and output apparatus 1006 may be provided in an integrated structure (for example, a touch panel).

Furthermore, these types of apparatus, including processor 1001, memory 1002, and others, are connected by bus 1007 for communicating information. Bus 1007 may be formed with a single bus, or may be formed with buses that vary between pieces of apparatus.

Also, base station 10 and terminals 20 may be structured to include hardware such as a microprocessor, a digital signal processor (DSP), an Application Specific Integrated Circuit (ASIC), a Programmable Logic Device (PLD), a Field Programmable Gate Array (FPGA), and so on, and part or all of the functional blocks may be implemented by the hardware. For example, the processor 1001 may be implemented with at least one of these pieces of hardware.

### <Notification and Signaling of Information>

Notification of information is by no means limited to the embodiments described in the present disclosure, and other methods may be used as well. For example, notification of information in the present disclosure may be implemented by using physical layer signaling (for example, downlink control information (DCI), uplink control information (UCI)), higher layer signaling (for example, Radio Resource Control (RRC) signaling, broadcast information (master information block (MIB), system information block (SIB), and so on), Medium Access Control (MAC) signaling), and other signals or combinations of these. Also, RRC signaling may be referred to as an "RRC message," and can be, for example, an RRC connection setup message, an RRC connection reconfiguration message, and so on.

### <Application System>

The embodiments illustrated in the present disclosure may be applied to Long Term Evolution (LTE), LTE-Advanced (LTE-A), SUPER 3G, IMT-Advanced, 4th generation mobile communication system (4G), 5th generation mobile communication system (5G), 6th generation mobile communication system (6G), xth generation mobile communication system (xG (where x is, for example, an integer or a decimal)), Future Radio Access (FRA), New Radio (NR), New radio access (NX), Future generation radio access (FX), W-CDMA (registered trademark), Global System for Mobile communications (GSM (registered trademark)), CDMA 2000, Ultra Mobile Broadband (UMB), IEEE 802.11 (Wi-Fi (registered trademark)), IEEE 802.16 (WiMAX (registered trademark)), IEEE 802.20, Ultra-WideBand (UWB), Bluetooth (registered trademark), systems that use other adequate radio communication methods, next-generation systems that are enhanced, modified, created, or defined based on these, and the like. A plurality of systems may be combined (for example, a combination of LTE or LTE-A and 5G, and the like) for application.

### <Processing Procedure and the like>

The order of processes, sequences, flowcharts, and so on that have been used to describe the aspects/embodiments in the present disclosure may be re-ordered as long as inconsistencies do not arise. For example, although various methods have been illustrated in the present disclosure with various components of steps in exemplary orders, the specific orders that are illustrated herein are by no means limiting.

### <Operation of Base Station>

Operations which have been described in the present disclosure to be performed by a base station may, in some cases, be performed by an upper node of the base station. In a network including one or a plurality of network nodes with base stations, it is clear that various operations that are performed to communicate with terminals can be performed by base stations, one or more network nodes (for example, Mobility Management Entities (MMEs), Serving-Gateways (S-GWs), and so on may be possible, but these are not limiting) other than base stations, or combinations of these. According to the above, a case is described in which there is a single network node other than the base station. However, a combination of multiple other network nodes may be considered (e.g., MME and S-GW).

### <Direction of Input and Output>

The information or signals described in this disclosure may be output from a higher layer (or lower layer) to a lower layer (or higher layer). The information or signals may be input or output through multiple network nodes.

### <Handling of Input and Output Information and the like>

The input or output information may be stored in a specific location (e.g., memory) or managed using management tables. The input or output information may be overwritten, updated, or added. The information that has been output may be deleted. The information that has been input may be transmitted to another apparatus.

### <Determination Method>

A decision or a determination in an embodiment of the present invention may be realized by a value (0 or 1) represented by one bit, by a boolean value (true or false), or by comparison of numerical values (e.g., comparison with a predetermined values).

### <Variations and the like of Aspects>

Each aspect/embodiment described in the present specification may be used independently, may be used in combination, or may be used by switching according to operations. Further, notification (transmission/reporting) of predetermined information (e.g., notification (transmission/reporting) of "X") is not limited to an explicit notification (transmission/reporting), and may be performed by an implicit notification (transmission/reporting) (e.g., by not performing notification (transmission/reporting) of the predetermined information).

As described above, the present invention has been described in detail. It is apparent to a person skilled in the art that the present invention is not limited to one or more embodiments of the present invention described in the present specification. Modifications, alternatives, replacements, etc., of the present invention may be possible without departing from the subject matter and the scope of the present invention defined by the descriptions of claims. Therefore, the descriptions of the present specification are for illustrative purposes only, and are not intended to be limitations to the present invention.

### <Software>

Software should be broadly interpreted to mean, whether referred to as software, firmware, middle-ware, microcode, hardware description language, or any other name, instructions, instruction sets, codes, code segments, program codes, programs, subprograms, software modules, applications, software applications, software packages, routines, subroutines, objects, executable files, executable threads, procedures, functions, and the like.

Further, software, instructions, information, and the like may be transmitted and received via a transmission medium. For example, in the case where software is transmitted from a website, server, or other remote source using at least one of wired line technologies (such as coaxial cable, fiber optic cable, twisted pair, digital subscriber line (DSL), etc.) or wireless technologies (infrared, microwave, etc.), at least one of these wired line technologies or wireless technologies is included within the definition of the transmission medium.

### <Information and Signals>

Information, a signal, or the like, described in the present specification may be represented by using any one of various different technologies. For example, data, an instruction, a command, information, a signal, a bit, a symbol, a chip, or the like, described throughout the present application, may be represented by a voltage, an electric current, electromagnetic waves, magnetic fields, a magnetic particle, optical fields, a photon, or a combination thereof.

It should be noted that a term used in the present specification and/or a term required for understanding of the present specification may be replaced by a term having the same or similar meaning. For example, a channel and/or a symbol may be a signal (signaling). Further, a signal may be a message. Further, the component carrier (CC) may be referred to as a carrier frequency, cell, frequency carrier, or the like.

### <System and Network>

As used in the present disclosure, the terms "system" and "network" are used interchangeably.

### <Names of Parameters and Channels>

Further, the information, parameters, and the like, described in the present disclosure may be expressed using absolute values, relative values from predetermined values, or they may be expressed using corresponding different information. For example, a radio resource may be what is indicated by an index.

The names used for the parameters described above are not used as limitations. Further, the mathematical equations using these parameters may differ from those explicitly disclosed in the present disclosure. Because the various channels (e.g., PUCCH, PDCCH) and information elements may be identified by any suitable names, the various names assigned to these various channels and information elements are not used as limitations.

### <Base Station>

In the present disclosure, the terms such as a "base station (BS)," a "radio base station," a "fixed station," a "NodeB," an "eNB (eNodeB)," a "gNB (gNodeB)," an "access point," a "transmission point," a "reception point," a "transmission/reception point," a "panel," a "cell," a "sector," a "cell group," a "carrier," a "component carrier," and so on can be used interchangeably. The base station may be referred to as the terms such as a "macro cell," a "small cell," a "femto cell," a "pico cell," and so on.

A base station can accommodate one or a plurality of (for example, three) cells. When a base station accommodates a plurality of cells, the entire coverage area of the base station can be partitioned into multiple smaller areas, and each smaller area can provide communication services through base station subsystems (for example, indoor small base stations (Remote Radio Heads (RRHs))). The term "cell" or "sector" refers to part of or the entire coverage area of at least one of a base station and a base station subsystem that provides communication services within this coverage.

### <Mobile Station>

In the present disclosure, the terms "mobile station (MS)," "user terminal," "user equipment (UE)," and "terminal" may be used interchangeably.

A mobile station may be referred to as a "subscriber station," "mobile unit," "subscriber unit," "wireless unit," "remote unit," "mobile device," "wireless device," "wireless communication device," "remote device," "mobile subscriber station," "access terminal," "mobile terminal," "wireless terminal," "remote terminal," "handset," "user agent," "mobile client," "client," or some other appropriate terms in some cases.

### <Base Station/Mobile Station>

At least one of a base station and a mobile station may be referred to as a "transmitting apparatus," a "receiving apparatus," a "radio communication apparatus," and so on. Note that at least one of a base station and a mobile station may be a device mounted on a moving object or a moving object itself, and so on. The moving object is a movable object with any moving speed, and naturally a case where the moving object is stopped is also included. Examples of the moving object include a vehicle, a transport vehicle, an automobile, a motorcycle, a bicycle, a connected car, a loading shovel, a bulldozer, a wheel loader, a dump truck, a fork lift, a train, a bus, a trolley, a rickshaw, a ship and other watercraft, an airplane, a rocket, a satellite, a drone, a multicopter, a quadcopter, a balloon, and an object mounted on any of these, but these are not restrictive. The moving object may be a moving object that autonomously travels based on a direction for moving. The moving object may be a vehicle (for example, a car, an airplane, and the like), may be a moving object which moves unmanned (for example, a drone, an automatic operation car, and the like), or may be a robot (a manned type or unmanned type). Note that at least one of a base station and a mobile station also includes an apparatus which does not necessarily move during communication operation. For example, at least one of a base station and a mobile station may be an Internet of Things (IoT) device such as a sensor.

Furthermore, the base station in the present disclosure may be interpreted as a terminal. For example, an embodiment of the present disclosure may be applied to the structure that replaces a communication between a base station and a terminal with a communication between a plurality of terminals (for example, which may be referred to as "Device-to-Device (D2D)," "Vehicle-to-Everything (V2X)," and the like). In this case, terminal 20 may have the functions of base station 10 described above. The words such as "uplink" and "downlink" may be interpreted as the words corresponding to the terminal-to-terminal communication (for example, "sidelink"). For example, an uplink channel, a downlink channel and so on may be interpreted as a sidelink channel.

Likewise, the terminal in the present disclosure may be interpreted as base station. In this case, base station 10 may have the functions of terminal 20 described above.

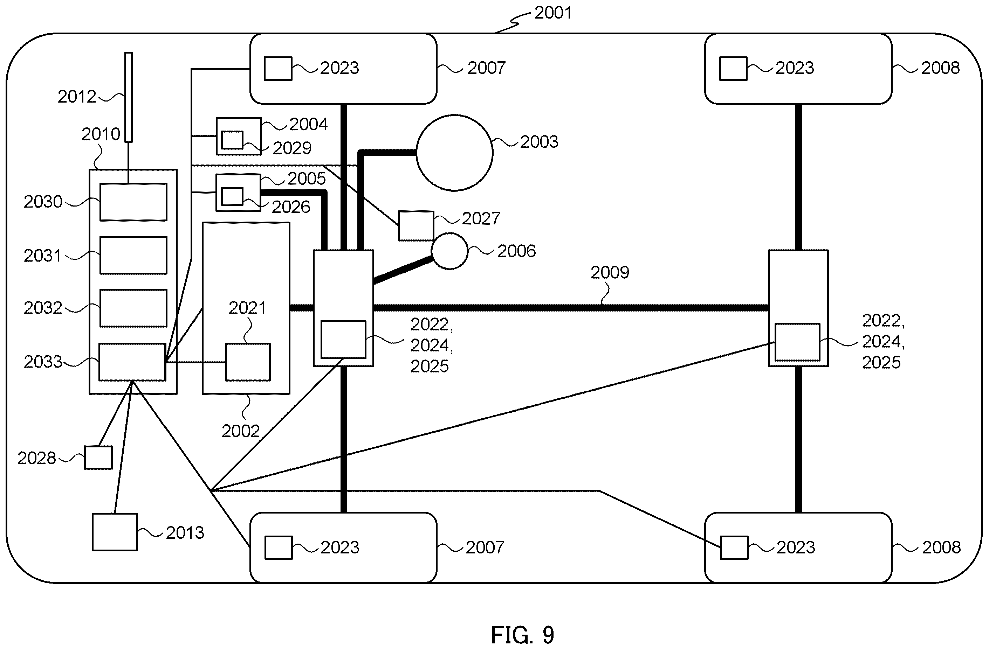

FIG. 9 shows an example of a configuration of vehicle 2001. As shown in FIG. 9, vehicle 2001 includes drive unit 2002, steering unit 2003, accelerator pedal 2004, brake pedal 2005, shift lever 2006, front wheel 2007, rear wheel 2008, axle 2009, electronic control unit 2010, various sensors 2021 to 2029, information service unit 2012, and communication module 2013. The aspects/embodiments described in the present disclosure may be applied to a communication device mounted in vehicle 2001, and may be applied to, for example, communication module 2013.

Drive unit 2002 may include, for example, an engine, a motor, and a hybrid of an engine and a motor. Steering unit 2003 includes at least a steering wheel and is configured to steer at least one of the front wheel or the rear wheel, based on the operation of the steering wheel operated by the user.

Electronic control unit 2010 includes microprocessor 2031, memory (ROM, RAM) 2032, and communication port (IO port) 2033. Electronic control unit 2010 receives signals from the various sensors 2021 to 2029 provided in vehicle 2001. Electronic control unit 2010 may be referred to as an ECU (Electronic control unit).

Signals from various sensors 2021 to 2029 include a current signal from current sensor 2021 which senses the current of the motor, a front or rear wheel rotation signal acquired by revolution sensor 2022, a front or rear wheel pneumatic signal acquired by pneumatic sensor 2023, a vehicle speed signal acquired by vehicle speed sensor 2024, an acceleration signal acquired by acceleration sensor 2025, a stepped-on accelerator pedal signal acquired by accelerator pedal sensor 2029, a stepped-on brake pedal signal acquired by brake pedal sensor 2026, an operation signal of a shift lever acquired by shift lever sensor 2027, and a detection signal, acquired by object detection sensor 2028, for detecting an obstacle, a vehicle, a pedestrian, and the like.

Information service unit 2012 includes various devices for providing (outputting) various kinds of information such as driving information, traffic information, and entertainment information, including a car navigation system, an audio system, a speaker, a television, and a radio, and one or more ECUs controlling these devices. The information service unit 2012 provides various types of multimedia information and multimedia services to the occupants of the vehicle 2001 by using information obtained from the external device through the communication module 2013 or the like.

Information service unit 12 may include an input device (for example, a keyboard, a mouse, a microphone, a switch, a button, a sensor, a touch panel, and the like) for receiving input from the outside, or may include an output device (for example, a display, a speaker, an LED lamp, a touch panel, and the like) for implementing output to the outside.

Driving support system unit 2030 includes: various devices for providing functions of preventing accidents and reducing driver's operating loads such as a millimeter wave radar, a LiDAR (Light Detection and Ranging), a camera, a positioning locator (e.g., GNSS, etc.), map information (e.g., high definition (HD) map, autonomous vehicle (AV) map, etc.), a gyro system (e.g., IMU (Inertial Measurement Unit), INS (Inertial Navigation System), etc.), an AI (Artificial Intelligence) chip, an AI processor; and one or more ECUs controlling these devices. In addition, driving support system unit 2030 transmits and receives various types of information via communication module 2013 to realize a driving support function or an autonomous driving function.

Communication module 2013 may communicate with microprocessor 2031 and components of vehicle 2001 via a communication port. For example, communication module 2013 transmits and receives data via communication port 2033, to and from drive unit 2002, steering unit 2003, accelerator pedal 2004, brake pedal 2005, shift lever 2006, front wheel 2007, rear wheel 2008, axle 2009, microprocessor 2031 and memory (ROM, RAM) 2032 in electronic control unit 2010, and sensors 2021 to 29 provided in vehicle 2001.

Communication module 2013 is a communication device that can be controlled by microprocessor 2031 of electronic control unit 2010 and that is capable of communicating with external devices. For example, various kinds of information are transmitted to and received from external devices through radio communication. Communication module 2013 may be internal to or external to electronic control unit 2010. The external devices may include, for example, a base station, a mobile station, or the like.

Communication module 2013 may transmit at least one of signals from various sensors 2021 to 2029 described above input to electronic control unit 2010, information obtained based on the signals, and information based on an input from the outside (a user) obtained via information service unit 2012, to the external apparatus via radio communication. Electronic control unit 2010, various sensors 2021 to 2029, information service unit 2012, and the like may be referred to as input units that receive input. For example, the PUSCH transmitted by communication module 2013 may include information based on the input.

Communication module 2013 receives various types of information (traffic information, signal information, inter-vehicle information, etc.) transmitted from the external devices and displays the received information on information service unit 2012 provided in vehicle 2001. Information service unit 2012 may be referred to as an output unit that outputs information (for example, outputs information to devices, such as a display and a speaker, based on the PDSCH received by communication module 2013 (or data/information decoded from the PDSCH)).

In addition, communication module 2013 stores the various types of information received from the external devices in memory 2032 available to microprocessor 2031. Based on the information stored in memory 2032, microprocessor 2031 may control drive unit 2002, steering unit 2003, accelerator pedal 2004, brake pedal 2005, shift lever 2006, front wheel 2007, rear wheel 2008, axle 2009, and sensors 2021 to 2029 mounted in vehicle 2001.

### <Meaning and Interpretation of Terms>

As used herein, the term "determining" may encompasses a wide variety of actions. For example, "determining" may be regarded as judging, calculating, computing, processing, deriving, investigating, looking up or search inquiry (e.g., looking up in a table, a database or another data structure), ascertaining and the like. Also, "determining" may be regarded as receiving (e.g., receiving information), transmitting (e.g., transmitting information), inputting, outputting, accessing (e.g., accessing data in a memory) and the like. Also, "determining" may be regarded as resolving, selecting, choosing, establishing, comparing, and the like. That is, "determining" may be regarded as a certain type of action related to determining. Also, "determining" may be replaced with "assuming," "expecting," "considering," and the like.

The term "connected" or "coupled" or any variation thereof means any direct or indirect connection or connection between two or more elements and may include the presence of one or more intermediate elements between the two elements "connected" or "coupled" with each other. The coupling or connection between the elements may be physical, logical, or a combination thereof. For example, "connection" may be read as "access". As used in the present disclosure, the two elements may be thought of as being "connected" or "coupled" to each other using at least one of the one or more wires, cables, or printed electrical connections and, as a number of non-limiting and non-inclusive examples, electromagnetic energy having wavelengths in the radio frequency region, the microwave region, and the light (both visible and invisible) region.

### <Reference Signal>

A reference signal may be abbreviated as an "RS," and may be referred to as a "pilot" and so on, depending on which standard applies.

### <Meaning of "Based On">

The phrase "based on" (or "on the basis of") as used in the present disclosure does not mean "based only on" (or "only on the basis of"), unless otherwise specified. In other words, the phrase "based on" (or "on the basis of') means both "based only on" and "based at least on" ("only on the basis of" and "at least on the basis of").

### <"First" and "Second">

Reference to elements with designations such as "first," "second," and so on as used in the present disclosure does not generally limit the quantity or order of these elements. These designations may be used in the present disclosure only for convenience, as a method for distinguishing between two or more elements. Thus, reference to the first and second elements does not imply that only two elements may be employed, or that the first element must precede the second element in some way.

### <Means>

"Means" included in the configuration of each of the above apparatuses may be replaced by "parts," "circuits," "devices," etc.

### <Open Form>

In the case where the terms "include," "including" and variations thereof are used in the present disclosure, these terms are intended to be comprehensive in the same way as the term "comprising." Further, the term "or" used in the present specification is not intended to be an "exclusive or."

### <Time Units such as TTI, Frequency Units such as RB, and Radio Frame Configuration>

A radio frame may be constituted of one or a plurality of periods (frames) in the time domain. Each of one or a plurality of periods (frames) constituting a radio frame may be referred to as a "subframe." Furthermore, a subframe may be constituted of one or a plurality of slots in the time domain. A subframe may be a fixed time length (for example, 1 ms) independent of numerology.

Numerology may be a communication parameter applied to at least one of transmission and reception of a certain signal or channel. For example, numerology may indicate at least one of a subcarrier spacing (SCS), a bandwidth, a symbol length, a cyclic prefix length, a transmission time interval (TTI), the number of symbols per TTI, a radio frame structure, a specific filter processing performed by a transceiver in the frequency domain, a specific windowing processing performed by a transceiver in the time domain, and so on.

A slot may be constituted of one or a plurality of symbols in the time domain (Orthogonal Frequency Division Multiplexing (OFDM) symbols, Single Carrier Frequency Division Multiple Access (SC-FDMA) symbols, and so on). Furthermore, a slot may be a time unit based on numerology.

A slot may include a plurality of mini-slots. Each mini-slot may be constituted of one or a plurality of symbols in the time domain. A mini-slot may be referred to as a "sub-slot." A mini-slot may be constituted of symbols less than the number of slots. A PDSCH (or PUSCH) transmitted in a time unit larger than a mini-slot may be referred to as "PDSCH (PUSCH) mapping type A." A PDSCH (or PUSCH) transmitted using a mini-slot may be referred to as "PDSCH (PUSCH) mapping type B."

A radio frame, a subframe, a slot, a mini-slot, and a symbol all express time units in signal communication. A radio frame, a subframe, a slot, a mini-slot, and a symbol may each be called by other applicable terms.

For example, one subframe may be referred to as a "Transmission Time Interval (TTI)," a plurality of consecutive subframes may be referred to as a "TTI," or one slot or one mini-slot may be referred to as a "TTI." In other words, at least one of a subframe and a TTI may be a subframe (1 ms) in existing LTE, may be a period shorter than 1 ms (for example, 1 to 13 symbols), or may be a period longer than 1 ms. Note that a unit expressing TTI may be referred to as a "slot," a "mini-slot," or the like, instead of a "subframe."

Here, a TTI refers to the minimum time unit of scheduling in radio communication, for example. For example, in LTE systems, a base station performs, for user terminals, scheduling of allocating radio resources (such as a frequency bandwidth and transmit power available for each user terminal) in TTI units. Note that the definition of the TTI is not limited to this.

The TTI may be a transmission time unit for channel-encoded data packets (transport blocks), code blocks, codewords, or the like, or may be a unit of processing in scheduling, link adaptation, or the like. Note that, when a TTI is given, a time interval (for example, the number of symbols) to which transport blocks, code blocks, codewords, or the like are actually mapped may be shorter than the TTI.

Note that, in the case where one slot or one mini-slot is referred to as a TTI, one or more TTIs (that is, one or more slots or one or more mini-slots) may be the minimum time unit of scheduling. Furthermore, the number of slots (the number of mini-slots) constituting the minimum time unit of the scheduling may be controlled.

A TTI having a time length of 1 ms may be referred to as a "normal TTI" (TTI in LTE Rel. 8 to Rel. 12), a "long TTI," a "normal subframe," a "long subframe," a "slot," or the like. A TTI that is shorter than a normal TTI may be referred to as a "shortened TTI," a "short TTI," a "partial or fractional TTI," a "shortened subframe," a "short subframe," a "mini-slot," a "sub-slot," a "slot" and so on.

Note that a long TTI (for example, a normal TTI, a subframe, or the like) may be interpreted as a TTI having a time length exceeding 1 ms, and a short TTI (for example, a shortened TTI or the like) may be interpreted as a TTI having a TTI length shorter than the TTI length of a long TTI and equal to or longer than 1 ms.

A resource block (RB) is the unit of resource allocation in the time domain and the frequency domain, and may include one or a plurality of consecutive subcarriers in the frequency domain. The number of subcarriers included in an RB may be the same regardless of numerology, and, for example, may be 12. The number of subcarriers included in an RB may be determined based on numerology.

An RB may include one or a plurality of symbols in the time domain, and may be one slot, one mini-slot, one subframe, or one TTI in length. One TTI, one subframe, and so on each may be constituted of one or a plurality of resource blocks.

Note that one or a plurality of RBs may be referred to as a "physical resource block (Physical RB (PRB))," a "sub-carrier group (SCG)," a "resource element group (REG),"a "PRB pair," an "RB pair" and so on.

Furthermore, a resource block may be constituted of one or a plurality of resource elements (REs). For example, one RE may correspond to a radio resource field of one subcarrier and one symbol.

A bandwidth part (BWP) (which may be referred to as a "fractional bandwidth," and so on) may represent a subset of contiguous common resource blocks (common RBs) for certain numerology in a certain carrier. Here, a common RB may be specified by an index of the RB based on the common reference point of the carrier. A PRB may be defined by a certain BWP and may be numbered in the BWP.

The BWP may include a UL BWP (BWP for UL) and a DL BWP (BWP for DL). One or a plurality of BWPs may be configured in one carrier for a UE.

At least one of configured BWPs may be active, and a UE may not need to assume to transmit/receive a certain signal/channel outside the active BWP(s). Note that a "cell," a "carrier," and so on in the present disclosure may be interpreted as a "BWP".

Note that the above-described structures of radio frames, subframes, slots, mini-slots, symbols, and so on are merely examples. For example, structures such as the number of subframes included in a radio frame, the number of slots per subframe or radio frame, the number of mini-slots included in a slot, the numbers of symbols and RBs included in a slot or a mini-slot, the number of subcarriers included in an RB, the number of symbols in a TTI, the symbol length, the cyclic prefix (CP) length, and so on can be variously changed.

### <Maximum Transmit Power>

The "maximum transmit power" described in the present disclosure may mean a maximum value of the transmit power, the nominal UE maximum transmit power, or the rated UE maximum transmit power.

### <Article>

In the present disclosure, where an article is added by translation, for example "a," "an," and "the," the disclosure may include that the noun following these articles is plural.

### <"Different">

In this disclosure, the term "A and B are different" may mean "A and B are different from each other." It should be noted that the term "A and B are different" may mean "A and B are different from C." Terms such as "separated" or "combined" may be interpreted in the same way as the above-described "different."

### Industrial Applicability

An aspect of the present disclosure is useful for radio communication systems.

### Reference Signs List

10 Base station
101 Transmission section
102 Reception section
103 Control section
20 Terminal
201 Reception section
202 Transmission section
203 Control section

## Claims

1. A terminal, comprising:
a reception section that receives a parameter of higher layer signaling; and
a control section that determines activation and deactivation of transmission of an uplink signal, based on a downlink control signal and the parameter of the higher layer signaling, wherein
the control section determines each of a plurality of uplink signal occasions in a single period based on individual time resource allocation information.

2. A terminal, comprising:
a reception section that receives a parameter of higher layer signaling; and
a control section that determines activation and deactivation of transmission of an uplink signal, based on a downlink control signal and the parameter of the higher layer signaling, wherein
the control section determines each of a plurality of uplink signal occasions in a single period based on one piece of time resource allocation information and a number of the plurality of uplink signal occasions.

3. The terminal according to claim 2, wherein
the control section receives the number of the plurality of uplink signal occasions via the downlink control signal.

4. The terminal according to claim 2, wherein
the control section receives the number of the plurality of uplink signal occasions via the parameter of the higher layer signaling.

5. A communication method, comprising:
receiving, by a terminal, a parameter of higher layer signaling;
determining, by the terminal, activation and deactivation of transmission of an uplink signal, based on a downlink control signal and the parameter of the higher layer signaling; and
determining, by the terminal, each of a plurality of uplink signal occasions in a single period based on individual time resource allocation information.

6. A communication method, comprising:
receiving, by a terminal, a parameter of higher layer signaling;
determining, by the terminal, activation and deactivation of transmission of an uplink signal, based on a downlink control signal and the parameter of the higher layer signaling; and
determining, by the terminal, each of a plurality of uplink signal occasions in a single period based on one piece of time resource allocation information and a number of the plurality of uplink signal occasions.
